# EUROPÄISCHE PATENTSCHRIFT

(11) **EP 0 913 916 B1**
(45) Veröffentlichungstag und Bekanntmachung des Hinweises auf die Patenterteilung: **02.06.2004**
(21) Anmeldenummer: 98810997.1
(22) Anmeldetag: 05.10.1998
(51) Int. Cl.: H01F 29/02, H02J 3/18

(54) **Drehstromtransformator**
Three-phase transformer
Transformateur triphasé

(30) Priorität: 31.10.1997 DE 19748146
(43) Veröffentlichungstag der Anmeldung: 06.05.1999
(73) Patentinhaber: ABB Sécheron SA, 1211 Genève (CH)
(72) Erfinder: Bilger, Helmut, 1217 Meyrin (CH); Ravot, Jean-François, 01170 Chevry (FR)
(74) Vertreter: ABB Patent Attorneys

(56) Entgegenhaltungen:
- EP-A- 0 510 474
- DE-A- 2 753 464
- DE-A- 2 904 470

## Beschreibung

### TECHNISCHES GEBIET

Die vorliegende Erfindung bezieht sich auf die elektrische Energieumwandlung mittels Drehstromtransformatoren in elektrischen Netzwerken. Sie betrifft einen Drehstromransformator, wie er im Oberbegriff des ersten Anspruchs beschrieben ist.

### TECHNOLOGISCHER HINTERGRUND UND STAND DER TECHNIK

In vermaschten elektrischen Energieversorgungsnetzen oder Ringnetzen besteht vielfach die Aufgabe, die Stromverteilung im Netz zu ändern, um einen Zweig vor Überlastung zu schützen oder um einen möglichst guten Wirkungsgrad in der Gesamtstromverteilung, also kleinste Netzverluste, zu erreichen. Dies wird dadurch möglich, dass man in das Ringnetz eine Spannung einfügt, die Kreisströme bewirkt. Die Überlagerung der bisherigen Netzströmen mit diesen Kreisströmen ergibt eine geänderte Stromverteilung im Netz und damit auch in den im Netz installierten, parallel betriebenen Transformatoren.

Das Hinzufügen einer Zusatzspannung U_{z} in einem Netzzweig kann innerhalb des Netzes sowohl die Wirkleistungsverteilung wie auch die Blindleistungsverteilung in gewünschter Weise beeinflussen. Hierfür weist die Zusatzspannung U_{z} eine sogenannte Längskomponente auf, welche mit der Netzspannung in Phase liegt, und eine Querkomponente, die gegen die Netzspannung 90° phasenverschoben ist. Eine Änderung der Längskomponente nimmt Einfluss auf die Blindleistungsverteilung im Netz und die Variation der Querkomponente steuert den Wirkleistungsfluss. Eine Kombination aus Längsund Querregelung wird Schrägregelung genannt. Die sogenannte Schrägregelung nimmt somit sowohl auf die Blindleistungsverteilung als auch auf die Wirkleistungsverteilung im Netz Einfluss.

Eine nach dem obigen Prinzip wirkende Zusatzspannung U_{z} wird üblicherweise in Drehstromnetzen mittels dreiphasiger Spartransformatoren realisiert, wie beispielsweise in "Elektrische Maschinen" von Bödefeld/Sequenz, Springer Verlag 1971, auf den Seiten 86ff beschrieben ist. Für eine Steuerung der Längskomponente kommt ein normaler Stern-Spartransformator mit verschiedenen Spannungsabgriffen zum Einsatz, welcher im folgenden Längsregeltransformator genannt wird. Die Steuerung der Querkomponete wird meistens mit einem ebenfalls als Serientransformator ausgebildeten Dreieck-Spartransformator, einem sogenannten Querregeltransformator, vorgenommen. Dementsprechend werden für eine kombinierte Längs- und Querregelung in einem Netzzweig ein Haupttransformator mit einem Längsregeltransformator und einem Querregeltransformator in Serie geschaltet. Der Haupttransformator dient der Kopplung des Oberspannungsnetzes und des Unterspannungsnetzes und die in Serie geschalteten Längs- und Querregeltransformatoren erlauben durch Regelung eine verlustärmere und damit wirtschaftlichere Ausnutzung von parallelgeschalteten Transformatoren. Nachteilig an der beschriebenen Serienschaltung sind allerdings die hohen Herstellungskosten für die zusätzlichen Regeltransformatoren und ihr umfangreicher Platzbedarf. Des weiteren sind Längs- und Querregeltransformatoren ebenfalls verlustbehaftet und weisen namentlich Kupfer- und Eisenverlust auf.

Ein weiteres Beispiel für einen Drehstromtransformator ist offenbart in DE-A-2 753 464.

### DARSTELLUNG DER ERFINDUNG

Der Erfindung liegt die Aufgabe zugrunde, einen Drehstromtransformator der eingangs genannten Art dahingehend weiterzuentwickeln, dass er eine einfachere und kostengünstigere Längs- und Querregelung zur geeigneten Lastverteilung in einem elektrischen Netz ermöglicht, wobei der für die Längsund Querregelung benötigte Platzbedarf reduziert, und im Vergleich zum Stand der Technik eine Reduktion der Netzverlustleistung erzielt werden soll.

Erfindungsgemäss wird diese Aufgabe durch die Merkmale des ersten Anspruchs gelöst.

Der Kern der Erfindung ist darin zu sehen, dass innerhalb eines Drehstromtransformatorgehäuses sowohl die geforderte Energieübertragung zwischen zwei galvanisch getrennten Netzen vorgenommen wird als auch eine gewünschte Längs- und Quer- bzw. Schrägregelung zur Blind- und Wirkleistungsverteilung in einem Energienetz vorgenommen wird. Hierfür wird zu einer primärseitigen oder einer sekundärseitigen Phasenspannung eine stufenweise einstellbare Längsspannung, und jeweils eine stufenweise einstellbare Quer- bzw. Schrägspannung der beiden benachbarten Phasen addiert.

Die Vorteile der Erfindung sind unter anderem darin zu sehen, dass die sonst zwecks regelbarer Blind- und Wirkleistungsverteilung separat in Reihe zu einem Haupttransformator geschalteten Längs- und Querregeltransformatoren lediglich auf wenige Zusatzwicklungen im Haupttransformator reduziert werden zuzüglich eines Booster-Transformators auf einem separaten Aktivteil mit Lastschaltern. Durch diese Massnahme werden sowohl Baukosten wie auch Betriebskosten reduziert. An dieser Stelle umfassen die Ersparnisse bei den Baukosten die kostenintensiven Transformatorkerne herkömmlicher Längs- und Querregeltransformatoren, das Wicklungskupfer und die nötige Stellfläche der zusätzlichen Transformatoren. Betriebskostenersparnisse sind vor allem durch die geringeren Eisen- und Kupferverluste zu verzeichnen.

Ausführungsbeispiele der Erfindung sowie die damit erzielbaren Vorteile werden nachfolgend anhand der Zeichnungen erläutert.

### KURZE BESCHREIBUNG DER ZEICHNUNG

In der Zeichnung sind Ausführungsbeispiele der Erfindung schematisch dargestellt, und zwar zeigen:
- Fig. 1: schematisch eine erste Ausführungsform der Erfindung anhand eines Drehstromtransformators mit Längs- und Querregelwicklungen;
- Fig. 2: eine alternative Ausführungsform des Drehstromtransformators;

Es sind nur die für das Verständnis der Erfindung wesentlichen Elemente gezeigt.

### WEG ZUR AUSFÜHRUNG DER ERFINDUNG

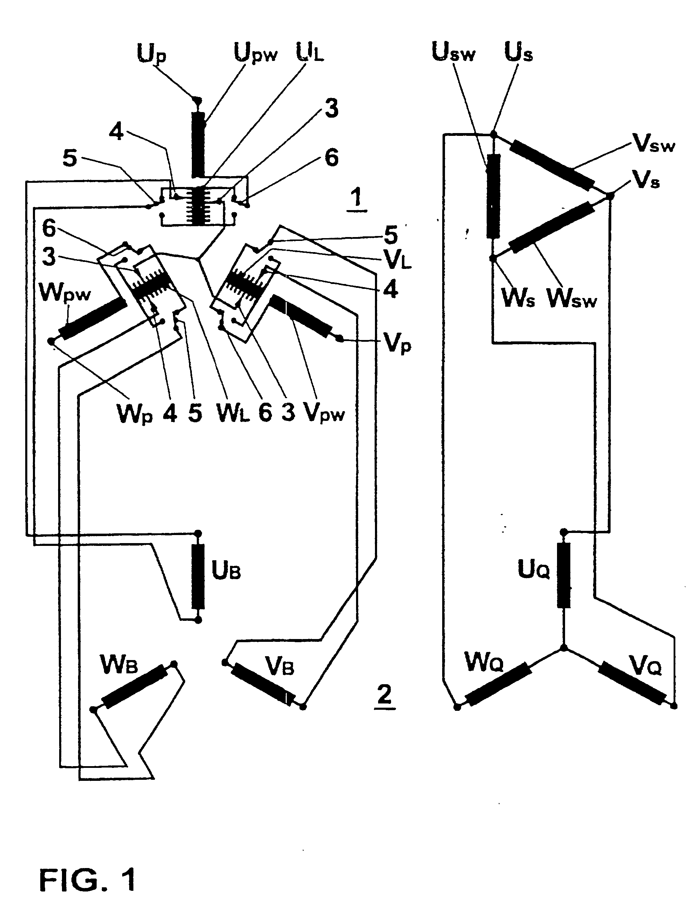

In Fig. 1 ist mit 1 ein Drehstromtransformator zur Energieübertragung zwischen elektrischen Netzen und mit 2 ein mit dem Drehstromtransformator in Wirkverbindung stehender Booster-Transformator bezeichnet. Der Drehstromtransformator weist drei Primärwicklungen U_{PW}, V_{PW} und W_{PW} mit den drei Phasenspannungen Uₚ, Vₚ und Wₚ auf und weiterhin weist der Drehstromtransformator drei Sekundärwicklungen U_{SW}, V_{SW} und W_{SW} mit den drei Phasenspannugen Uₛ, Vₛ und Wₛ auf. Auf jedem der hier nicht dargestellten Eisenkernschenkel sind pro Phase U, V, W des weiteren jeweils eine Längsregelwicklung U_{L}, V_{L} und W_{L} angeordnet.

Der Booster-Transformator 2 weist ebenfalls primärseitige Wicklungen U_{B}, V_{B}, W_{B} auf, so wie sekundärseitige Wicklungen U_{Q}, V_{Q}, W_{Q} die hier als Querwicklungen fungieren. Die Wicklungen des Booster-Transformators 2 sind auf einem separaten Eisengestell im Gehäuse des Drehstromtransformators 1 angeordnet. Die primärseitigen Wicklungen U_{B}, V_{B}, W_{B} des Booster-Transformators 2 sind über einen Stufenschalter 4 und einen Lastschalter 5 jeweils mit den Längsregelwicklungen U_{L}, V_{L} und W_{L} des Drehstromtransformators 1 gleicher Phase verbunden. Die sekundärseitigen Wicklungen U_{Q}, V_{Q}, W_{Q} des Booster-Transformators 2 sind mit den Sekundärwicklungen U_{SW}, V_{SW}, W_{SW} des Drehstromtransformators 1 elektrisch verbunden. Bis auf die Sekundärwicklungen U_{SW}, V_{SW}, W_{SW} sind alle weiteren Wicklungen des Drehstromtransformators 1 und des Booster-Transformators 2 in Sternschaltung verschaltet. Die Sekundärwicklungen U_{SW}, V_{SW}, W_{SW} des Drehstromtransformators 1 ist als Dreieck verschaltet.

Wie bereits erläutert wurde, dienen aus dem Stand der Technik bekannte Längs- und Querregeltransformatoren der gezielten Blind- und Wirkleistungsverteilung in einem Energieverteilungsnetz. Erfindungsgemäss wird diese Blind- und Wirkleistungsverteilung durch geeignete elektrische Verbindungen der Längsregelwicklungen U_{L}, V_{L} und W_{L} und der Querregelwicklungen U_{Q}, V_{Q}, W_{Q} mittels Booster-Transformator 2 mit den Primär- und Sekundärwicklungen U_{PW}, V_{PW}, W_{PW}, U_{SW}, V_{SW} und W_{SW} erreicht. Die nötigen Regelverfahren zur Blind- und Wirkleistungsverteilung sind hinlänglich in Verbindung mit der Verwendung herkömmlicher Längs- und Querregeltransformatoren bekannt, so dass diese Regelverfahren an sich im folgenden nicht näher erläutert werden. Die Erfindung betrifft vorrangig eine elektrische Schaltung, an welcher herkömmliche Regelverfahren zur Anwendung gelangen können.

Wie in Fig. 1 gezeigt wird, ist die Primärwicklung U_{PW} der Phase U über einen Stufenschalter 3 und einen Lastschalter 6 mit einer in gleicher Phase liegenden, aus einer Anzahl Teilwicklungen bestehenden, Längsregelwicklung U_{L} verbunden. Die beiden Primärwicklungen V_{PW} und W_{PW} der benachbarten Phasen V und W sind entsprechend der Installation in Phase U mit den Längsregelwicklungen V_{L} und W_{L} elektrisch über den Stufenschalter 3 und den Lastschalter verbunden. Der installierte Stufenschalter 3 ist somit in allen drei Phasen U, V, W mit entsprechenden Stufenkontakten zur Ansteuerung der jeweiligen Teilwicklungen der Längsregelwicklungen U_{L}, V_{L} und W_{L} ausgerüstet, die eine in Grenzen stufenweise Variation der entsprechenden Phasenspannungen U_{P}, V_{P} und W_{P} erlaubt. Hierbei werden alle Phasen gleichzeitig mit nur einem Stufenschalter 3 um den gleichen Betrag m in p.u. (per unit) mittels Regelung variiert. Der zur Phasenspannung U_{P} addierte Spannungsanteil der Längsregelwicklungen U_{L} mit der Grösse m*U_{P} kann je nach gewählter Schaltstellung des Stufenschalters 3 und des Lastschalters 6 positiv oder negativ sein, so dass die resultierende Phasenspannung vergrössert oder verkleinert wird. Mit der Regelkorrektur der Längsregelwicklungen betragen die resultierenden Primärspannungen U_{P}+m*U_{P}, V_{P}+m*V_{P} und W_{P}+m*W_{P}.

Eine geregelte Änderung der Stellung des Stufenschalters 3 und des Lastschalters 6 wird in einem Energieverteilungsnetz mit mehreren parallelbetriebenen Drehstromtransformatoren zur Verminderung des Blindstromaustausches und der damit verbundenen Verluste eingesetzt.

Die Längsregelwicklungen U_{L}, V_{L} und W_{L} sind zudem wie bereits eingangs erläutert über einen Lastschalter 5 und einen Stufenschalter 4 mit den Booster-Wicklungen U_{B}, V_{B} und W_{B} verbunden. Die hierdurch zwischen dem Lastschalter 5 und einem Stufenschalter 4 an den Längsregelwicklungen U_{L}, V_{L} und W_{L} hinzuaddierten Spannungen haben gegenüber ihren zugehörigen Phasenspannungen U_{P}, V_{P}, W_{P} mit denen sie verknüpft sind eine Phasenverschiebung von 90° voreilend oder nacheilend. Die Grösse der hinzuaddierten Spannungen wird bestimmt durch den Stufenschalter 4, ihr Vorzeichen durch die Stellung des Lastschalters 5. Die 90° phasenverschobenen Zusatzspannungen werden generiert durch die Querspannugen U_{Q}, V_{Q} und W_{Q} im Booster-Transformator 2. Die Verschaltung der im Dreieck angeordneten Sekundärwicklungen U_{SW}, V_{SW}, W_{SW} im Drehstromtransformator 1 mit den im Stern angeordneten Wicklungen U_{Q}, V_{Q} und W_{Q} im Booster-Transformator 2 erzeugt die gewünschte 90° Phasenverschiebung der Zusatzspannung am Lastschalter 5 und Stufenschalter 4. Die Addition der 90° phasenverschobenen Zusatzspannungen zu den Primärwicklungen U_{P}, V_{P}, W_{P} korrigiert dieselben dahingehend, dass ihre neue Phasenverschiebung eine bevorzugte Wirkleistungsverteilung in einem elektrischen Netzwerk bewirkt und zudem eine Reduktion der Verluste ermöglicht. Der zu den Phasenspannungen U_{P}, V_{P}, W_{P} addierte Spannungsanteil der Querregelwicklungen U_{Q}, V_{Q}, W_{Q} weist einen Betrag von n in p.u. (per unit) auf und wird entsprechend einer Regelvorgabe variiert. Die Zusatzspannungen ergeben sich somit zu n*U_{B}, n*V_{B}, n*W_{B}; sie können je nach gewählter Schaltstellung des Stufenschalters 4 und des Lastschalters 5 positiv oder negativ sein, so dass der resultierende Phasenwinkel vergrössert oder verkleinert wird. Mit der Regelkorrektur der Querregelwicklungen U_{Q}, V_{Q}, W_{Q} betragen die resultierenden Primärspannungen U_{P}+n*U_{B}, V_{P}+n*V_{B} und W_{P}+n*W_{B}.

Wie beschrieben erfolgt also die erfindungsgemässe Längs- und Querregelung zur Blind- und Wirkleistungsverteilung in elektrischen Netzen unmittelbar an nur einer mit Stufenschaltern 3, 4 und Lastschaltern 5, 6 verbundenen Regelwicklung U_{L}, V_{L}, W_{L}. Als besonders Vorteilhaft ist dabei festzuhalten, dass die Regelwickungen U_{L}, V_{L}, W_{L}, an denen die Schaltvorgänge gemäss Regelung vollzogen werden auf niedrigem Potential gehalten werden, indem diese Regelwicklung sternpunktseitig installiert sind.

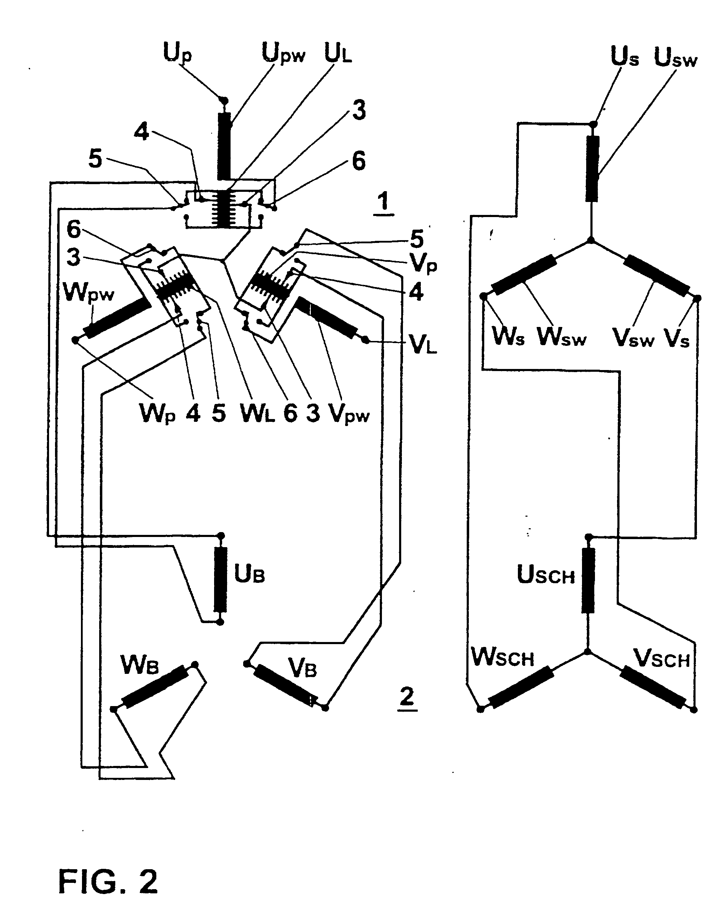

Eine alternative Ausführungsvariante der Erfindung zeigt Fig. 2. Der Unterschied zur ersten Lösung besteht darin, dass die Sekundärwicklungen U_{SW}, V_{SW}, W_{SW} des Drehstromtransformators 1 in einer Sternschaltung angeordnet sind. Somit ergibt die elektrische Kopplung der Sekundärwicklungen U_{SW}, V_{SW}, W_{SW} zum Booster-Transformator 2 an dessen sekundärseitigen Wicklungen sogenannte Schrägspannungen an Schrägregelwicklungen U_{Sch}, V_{Sch}, W_{Sch}.

Diese Schrägspannungen weisen nach einer Transformation im Booster-Transformator 2 an den Lastschaltern 5 und den Stufenschalttern 4 eine zu den entsprechenden Phasenspannungen U_{P}, V_{P}, W_{P} schräg stehende Zusatzspannung auf mit einer Phasenverschiebung ungleich 90°.

Denkbar im Sinn der Erfindung ist auch eine erfindungsgemässe Quer- und Längsregelung ausschliesslich auf der Sekundärseite des Drehstromtransformators 1 zu installieren, wobei die Schaltungsart aller Wicklungen im Drehstromtransformator und im Booster-Transformator zudem vom gezeigten abweichen kann.

### BEZUGSZEICHENLISTE

- Uₚ, Vₚ, Wₚ: primärseitige Phasespannungen
- Uₛ, Vₛ, Wₛ: sekundärseitige Phasespannungen
- U_{PW}, V_{PW}, W_{PW}: Primärwicklungen
- U_{SW}, V_{SW}, W_{SW}: Sekundärwicklungen
- U_{L}, V_{L}, W_{L}: Längsregelwicklungen
- U_{Q}, V_{Q}, W_{Q}: Querregelwicklungen
- U_{Sch}, V_{Sch}, W_{Sch}: Schrägregelwicklungen
- U_{B}, V_{B}, W_{B}: Booster-Wicklung
- 1: Transformator
- 2: Booster-Transformator
- 3: Stufenschalter
- 4: Stufenschalter
- 5: Lastschalter
- 6: Lastschalter

## Patentansprüche

1. Drehstromtransformator, der für jede Phase (U, V, W) mindestens eine primärseitige Wicklung (U_{PW}, V_{PW}, W_{PW}) und mindestens eine sekundärseitige Wicklung (U_{SW}, V_{SW}, W_{SW}) aufweist, welche auf einem Schenkel eines Eisenkerns installiert sind, wobei der Drehstromtransformator für den Einsatz in einem elektrischen Energieübertragungsnetz mit einer Längs- und/oder einer Querregelung und/oder einer Schrägregelung zur Erzielung einer geeigneten Blind- und/oder Wirkleistungsverteilung versehen ist,
**dadurch gekennzeichnet,**
- **dass** an jedem Schenkel für jede Phase (U, V, W) mindestens eine Längsregelwicklung (U_{L}, V_{L}, W_{L}) mit der primärseitigen Wicklung (U_{PW}, V_{PW}, W_{PW}) und/oder der sekundärseitigen Wicklung (U_{SW}, V_{SW}, W_{SW}) in Wirkverbindung steht,
- **dass** die Längsregelwicklung (U_{L}, V_{L}, W_{L}) mit einem ersten Stufenschalter (3) und einem ersten Lastschalter (6) für eine Längsregelung der primärseitigen Phasenspannung (Uₚ, Vₚ, Wₚ) und/oder sekundärseitigen Phasenspannungen (Uₛ, Vₛ, Wₛ) verbunden ist, und
- **dass** die Längsregelwicklung (U_{L}, V_{L}, W_{L}) über einen zweiten Stufenschalter (4) und einen zweiten Lastschalter (5) mit einem auf einem separaten Aktivteil angeordneten, dreiphasigen Booster-Transformator (2) zwecks Querregelung oder Schrägregelung in Wirkverbindung steht.

2. Drehstromtransformator nach Anspruch 1,
**dadurch gekennzeichnet,**
**dass** die Längsregelwicklung (U_{L}, V_{L}, W_{L}) über den zweiten Stufenschalter (4) und einen zweiten Lastschalter (5) mit einer Booster-Wicklung (U_{B}, V_{B}, W_{B}) elektrisch verbunden ist.

3. Drehstromtransformator nach Anspruch 2,
**dadurch gekennzeichnet,**
**dass** die primärseitige Wicklung (U_{PW}, V_{PW}, W_{PW}) oder die sekundärseitige Wicklung (U_{SW}, V_{SW}, W_{SW}) in galvanischer Wirkverbindung steht mit einer Querregelwicklung (U_{Q}, V_{Q}, W_{Q}) oder Schrägregelwicklung (U_{Sch}, V_{Sch}, W_{Sch}) des Booster-Transformators (2).

## Claims

1. A three-phase transformer which has, for each phase (U, V, W), at least one primary-side winding (U_{PW}, V_{PW}, W_{PW}) and at least one secondary-side winding (U_{SW}, V_{SW}, W_{SW}), which are installed on a limb of an iron core, the three-phase transformer, for use in an electrical power transmission network, being provided with in-phase and/or quadrature regulation and/or phase-angle regulation for the purpose of obtaining a suitable reactive and/or active volt-amperes distribution,
**characterized in that**
- on each limb for each phase (U, V, W) at least one in-phase regulating winding (U_{L}, V_{L}, W_{L}) is operatively connected to the primary-side winding (U_{PW}, V_{PW}, W_{PW}) and/or the secondary-side winding (U_{SW}, V_{SW}, W_{SW}),
- the in-phase regulating winding (U_{L}, V_{L}, W_{L}) is connected to a first tap switch (3) and a first load switch (6) for in-phase regulation of the primary-side phase voltage (U_{P}, V_{P}, W_{P}) and/or secondary-side phase voltages (U_{S}, V_{S}, W_{S}), and
- the in-phase regulating winding (U_{L}, V_{L}, W_{L}) is operatively connected via a second tap switch (4) and a second load switch (5) to a three-phase booster transformer (2), arranged on a separate active part, for the purpose of quadrature regulation or phase-angle regulation.

2. The three-phase transformer as claimed in claim 1,
**characterized in that**
the in-phase regulating winding (U_{L}, V_{L}, W_{L}) is electrically connected via the second tap switch (4) and a second load switch (5) to a booster winding (U_{B}, V_{B}, W_{B}).

3. The three-phase transformer as claimed in claim 2,
**characterized in that**
the primary-side winding (U_{PW}, V_{PW}, W_{PW}) or the secondary-side winding (U_{SW}, V_{SW}, W_{SW}) is directly electrically operatively connected to a quadrature regulating winding (U_{Q}, V_{Q}, W_{Q}) or phase-angle regulating winding (U_{sch}, V_{Sch}, W_{Sch}) of the booster transformer (2).

## Revendications

1. Transformateur triphasé qui présente pour chaque phase (U, V, W) au moins un enroulement côté primaire (U_{PW}, V_{PW}, W_{PW}) et au moins un enroulement côté secondaire (U_{SW}, V_{SW}, W_{SW}), lesquels sont installés sur une branche d'un noyau en fer, le transformateur triphasé étant prévu pour être utilisé dans un réseau de distribution d'énergie électrique avec une régulation longitudinale et/ou transversale et/ou une régulation oblique en vue d'obtenir une distribution appropriée de la puissance active ou de la puissance active,
**caractérisé en ce**
- **qu'**à chaque branche, pour chaque phase (U, V, W), au moins un enroulement de régulation longitudinale (U_{L}, V_{L}, W_{L}) se trouve en liaison active avec l'enroulement côté primaire (U_{PW}, V_{PW}, W_{PW}) et/ou l'enroulement côté secondaire (U_{SW}, V_{SW}, W_{SW}),
- **que** l'enroulement de régulation longitudinale (U_{L}, V_{L}, W_{L}) est relié avec un premier commutateur à paliers (3) et un premier commutateur de charge (6) pour une régulation longitudinale de la tension de phase côté primaire (U_{P}, V_{P}, W_{P}) et/ou les tensions de phase côté secondaire (U_{S}, V_{S}, W_{S}), et
- **que** l'enroulement de régulation longitudinale (U_{L}, V_{L}, W_{L}) se trouve en liaison active par le biais d'un deuxième commutateur à paliers (4) et d'un deuxième commutateur de charge (5) avec un transformateur intermédiaire (2) triphasé disposé sur une partie active séparée en vue de la régulation transversale ou de la régulation oblique.

2. Transformateur triphasé selon la revendication 1,
**caractérisé en ce que** l'enroulement de régulation longitudinale (U_{L}, V_{L}, W_{L}) est relié électriquement à un enroulement intermédiaire (U_{B}, V_{B}; W_{B}) par le biais du deuxième commutateur à paliers (4) et d'un deuxième commutateur de charge (5).

3. Transformateur triphasé selon la revendication 2,
**caractérisé en ce que** l'enroulement côté primaire (U_{PW}, V_{PW}, W_{PW}) ou l'enroulement côté secondaire (U_{SW}, V_{SW}, W_{SW}) se trouve en liaison galvanique active avec un enroulement de régulation transversale (U_{Q}, V_{Q}, W_{Q}) ou un enroulement de régulation oblique (U_{Sch}, V_{Sch}, W_{Sch}) du transformateur intermédiaire (2).
